# EUROPEAN PATENT SPECIFICATION

(11) **EP 1 795 418 B1**
(45) Date of publication and mention of the grant of the patent: **08.09.2010**
(21) Application number: 06025442.2
(22) Date of filing: 08.12.2006
(51) Int. Cl.: B60T 11/20, B60T 8/26, B60T 8/32, B60T 7/10

(54) **Interlocking brake system for bar-handle vehicle**
Verriegelte Bremssystem für Fahrzeug mit Lenkstange
Système de freinage verrouillé pour véhicule avec guidon

(30) Priority: 08.12.2005 JP 2005354956
(43) Date of publication of application: 13.06.2007
(73) Proprietor: NISSIN KOGYO CO., LTD., Ueda-shi, Nagano (JP)
(72) Inventor: Kusano, Toshihiro c/o NISSIN KOGYO CO., LTD., Nagano (JP); Hatakoshi, Genichi c/o NISSIN KOGYO CO., LTD., Nagano (JP)
(74) Representative: HOFFMANN EITLE

(56) References cited:
- DE-A1- 3 012 146
- JP-A- 9 254 771
- US-A- 4 176 886

## Description

### BACKGROUND OF THE INVENTION

### Field of the invention

The present invention relates to an interlocking brake system for a bar-handle vehicle and, more particularly, to a structure of a cylinder body including an interlocking slave cylinder and a front-wheel hydraulic master cylinder to be used in a hydraulic system for an interlocking brake.

### Description of the related art

In recent years, there has been proposed an interlocking brake system for a bar-handle vehicle. This interlocking brake system is provided with: a first hydraulic system for supplying hydraulic pressure to a front brake through a front-wheel hydraulic master cylinder in accordance with the operation of a front brake lever; and a second hydraulic system for supplying the hydraulic pressure to a rear brake through a rear actuator in accordance with the operation of a rear brake operation element and for supplying the hydraulic pressure to a front brake by activating the front-wheel hydraulic master cylinder through an interlocking slave cylinder hydraulically activated in accordance with the operation of the rear brake operation element. Those front-wheel hydraulic master cylinder and interlocking slave cylinder are arranged in parallel, and an arcuate interlocking member, which has two ends to abut against the piston end face of the front-wheel hydraulic master cylinder and the piston end face of the interlocking slave cylinder, is turnably connected at its intermediate portion to the front brake lever. When the front brake lever is operated to activate the front brake with the first hydraulic system, the interlocking member turns according to the operation of the front brake lever, and pushes the piston of the front-wheel hydraulic master cylinder thereby to actuate the front-wheel hydraulic master cylinder. When the rear brake operation element is operated to activate the front brake with the second hydraulic system, the interlocking slave cylinder is hydraulically activated so that the interlocking member is turned while holding the front brake lever in the inactive state, to push the piston of the front-wheel hydraulic master cylinder thereby to activate the front-wheel hydraulic master cylinder (as referred to Japanese Patent Unexamined Publication JP-A-9-254771.

In the aforementioned interlocking brake system, the front-wheel hydraulic master cylinder and the interlocking slave cylinder are made separate of each other. The bracket protruding from the cylinder body of the front-wheel hydraulic master cylinder and the bracket protruding from the cylinder body of the interlocking slave cylinder are integrally connected by bolts. The interlocking member and the front brake lever are arranged on the opening side of the front-wheel hydraulic master cylinder and the interlocking slave cylinder. As a result, the interlocking brake system is enlarged, and precisions are required for working or assembling the cylinder bores or ports of the front-wheel hydraulic master cylinder and the interlocking slave cylinder, and an operation feeling may be deteriorated when the tolerances set for working or assembling the individual cylinder bores or ports are combined.

### SUMMARY OF THE INVENTION

Therefore, an object of the invention is to provide an interlocking brake system for a bar-handle vehicle, which can be small-sized with a simple structure, which can form cylinder bores or ports precisely and which can attain a satisfactory operation feeling.

In order to achieve the aforementioned object, according to a first aspect of the invention, there is provided an interlocking brake system for a bar-handle vehicle, comprising an interlocking mechanism which performs such that:
when a rear brake operation element is operated, a rear-wheel hydraulic master cylinder supplies hydraulic pressure to a rear-wheel brake and an interlocking slave cylinder, and an interlocking member transmits a movement of a piston of the interlocking slave cylinder to a piston of a front-wheel hydraulic master cylinder to thereby supply the hydraulic pressure from the front-wheel hydraulic master cylinder to a front-wheel brake, and
when a front-wheel brake lever is operated, the interlocking member transmits an operation of the front-wheel brake lever to the piston of the front-wheel hydraulic master cylinder to thereby supply the hydraulic pressure from the front-wheel hydraulic master cylinder to the front-wheel brake,
the interlocking brake system is characterized in that:
   a cylinder bore of the interlocking slave cylinder and a cylinder bore of the front-wheel hydraulic master cylinder are arranged on one cylinder body so as to be parallel to each other,
   the two cylinder bores are formed adjacently on one side of the cylinder body by defining one side face of the cylinder body as a common working reference face,
   the front brake lever and the interlocking member are hinged on a rotation axis positioned between two openings of the cylinder bore so as to pivot along axial directions of the cylinder bores,
   the interlocking member comprises:
      a hinged portion hinged on the rotation axis;
      a pair of action arms extending longitudinal direction of the vehicle body from the hinged portion and individually abutting against a piston end face of the front-wheel hydraulic master cylinder and a piston end face of the interlocking slave cylinder;
      an abutment arm for abutting against an interlocking member pushing arm disposed at the front brake lever; and
      a rotation restriction member for restricting a rotation movement thereof toward the interlocking slave cylinder,
   the front brake lever comprises:
      a hinged portion hinged on the rotation axis;
      an operation portion extending from the hinged portion of the front brake lever;
      the interlocking member pushing arm formed at a base end portion of the operation portion; and
      a rotation restriction member for restricting the rotation movement toward the interlocking slave cylinder; and
   at least one of the rotation restriction member of the interlocking member and the rotation restriction member of the front brake lever abuts against the working reference face to restrict the rotation movements of the interlocking member and the front brake lever toward the interlocking slave cylinder.

According to a second aspect of the invention, as set forth in the first aspect of the invention, it is preferable that a first wall cover portion, which covers a abutting portion defined between one of the rotation restriction members and the working reference face, is formed on a side of the cylinder body opposite to a bar handle.

According to a third aspect of the invention, as set forth in the first or second aspect of the invention, it is preferable that a second wall cover portion, which covers an abutting portion defined between one of the rotation restriction members and the working reference face, is formed on an upper side of the cylinder body, the upper side is defined when the cylinder body is mounted on the vehicle body.

According to a fourth aspect of the invention, as set forth in any one of the first through third aspects of the invention, it is preferable that the rotation restriction member of the interlocking member is extended to form a switch action portion of a brake lamp switch.

According to the first aspect thus constituted, the front-wheel hydraulic master cylinder and the interlocking slave cylinder are integrated so that the interlocking brake system can be small-sized. Moreover, the front-wheel hydraulic master cylinder and the interlocking slave cylinder share the working reference face so that the individual cylinder bores and ports can be set after the common working reference face. As a result, the cylinder bores and the ports can be easily worked highly accurately, and the precisions of the clearances can be enhanced so that a satisfactory operation feeling can be obtained at the braking operation time. Moreover, the rotation restriction member of the interlocking member or the front brake lever is brought for the safety lock into abutment against the working reference face so that another abutment face for the safety lock need not be provided. At the position near the interlocking member or the front brake lever, moreover, the rotation restriction member can be brought into abutment against the working reference face so that the interlocking brake system can be small-sized.

According to the second and third aspects, the clearance, if formed between the rotation restriction member and the working reference face to abut against the former at the lever operating time, can be prevented from biting a foreign substance. Thus, the lever operation can always be done satisfactorily to reduce noises such as blowing noises.

According to the fourth aspect, the rotation restriction member of the interlocking member is provided with the switch action portion of the brake lamp switch so that the brake lamp switch is activated to turn ON the brake lamp when the front brake lever is operated or when the brake operator such as the rear brake lever or the rear brake pedal is operated.

### BRIEF DESCRIPTION OF THE DRAWINGS

Fig. 1 is a sectional front elevation of an essential portion of an interlocking brake system and shows a first embodiment of the invention;
Fig. 2 is an explanatory diagram of the interlocking brake system;
Fig. 3 is a sectional side elevation of an essential portion of the state, in which the interlocking brake system is mounted on a vehicle body;
Fig. 4 is a section taken along line IV - IV of Fig. 3;
Fig. 5 is a sectional front elevation of an essential portion of an interlocking brake system at the time when a front brake lever is operated;
Fig. 6 is a sectional front elevation of an essential portion of the interlocking brake system at the time when a rear brake pedal is operated;
Fig. 7 is a sectional front elevation of an essential portion of an interlocking brake system and shows a second embodiment of the invention;
Fig. 8 is a sectional side elevation of the state, in which the interlocking brake system is mounted on the vehicle body; and
Fig. 9 is a section taken along line IX - IX of Fig. 8.

### Best Mode for Carrying Out the Invention

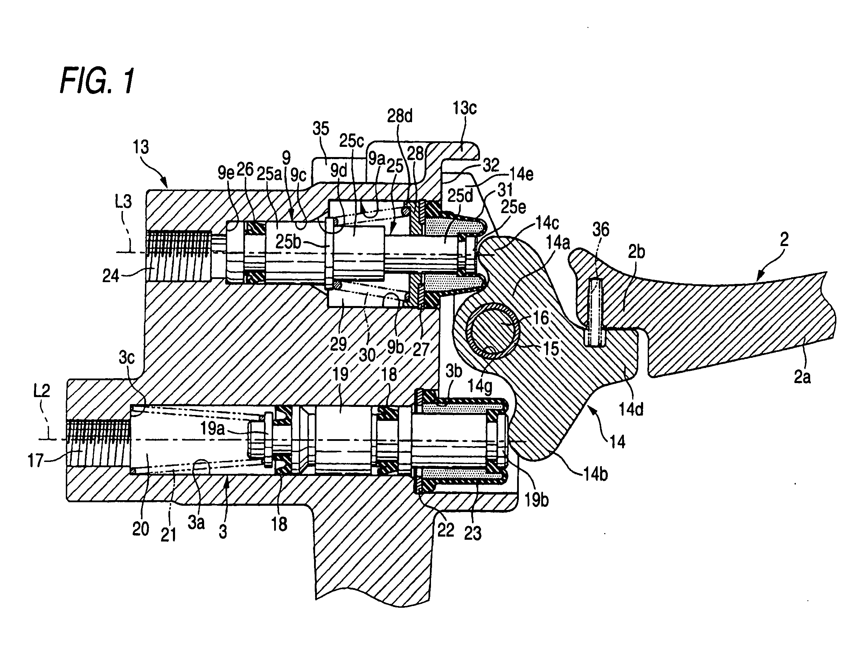

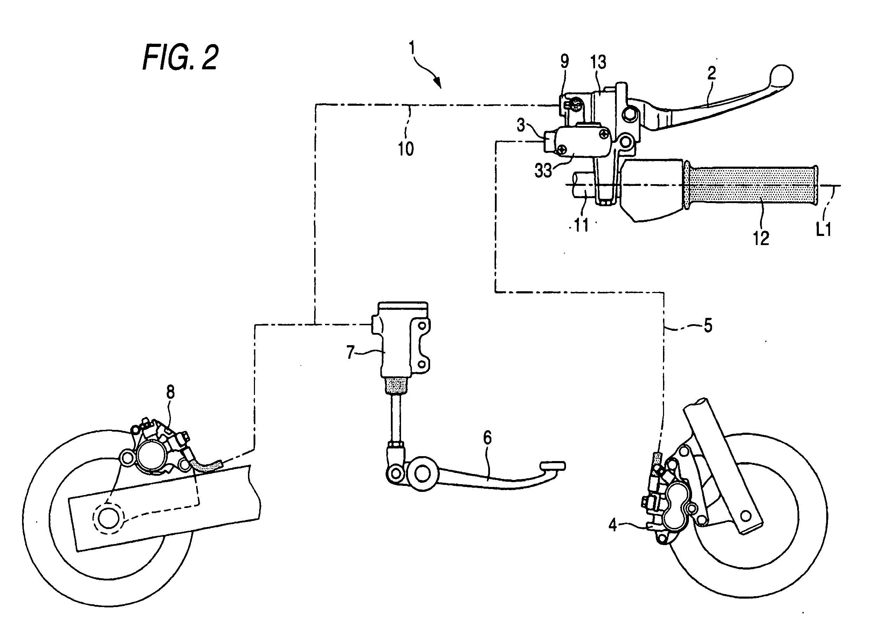

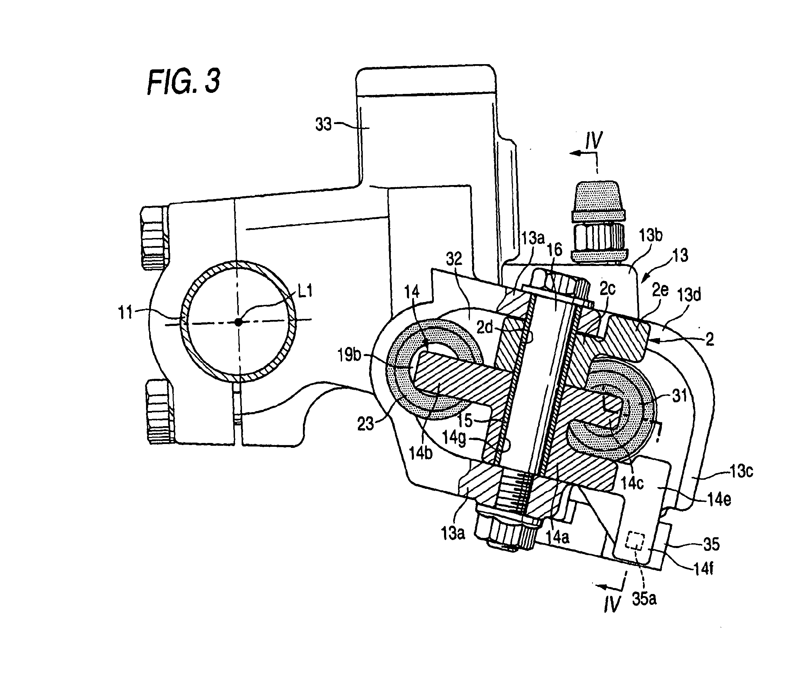

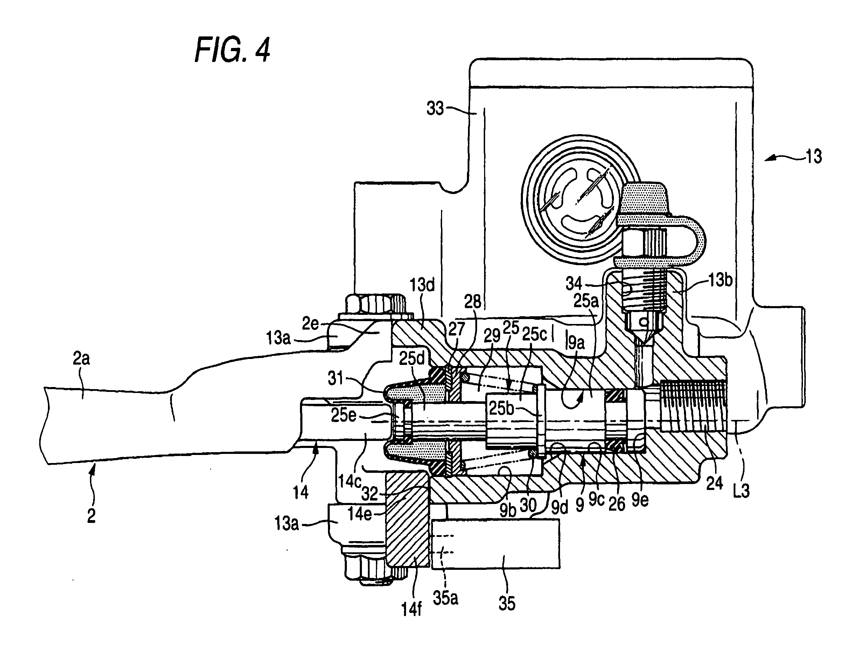

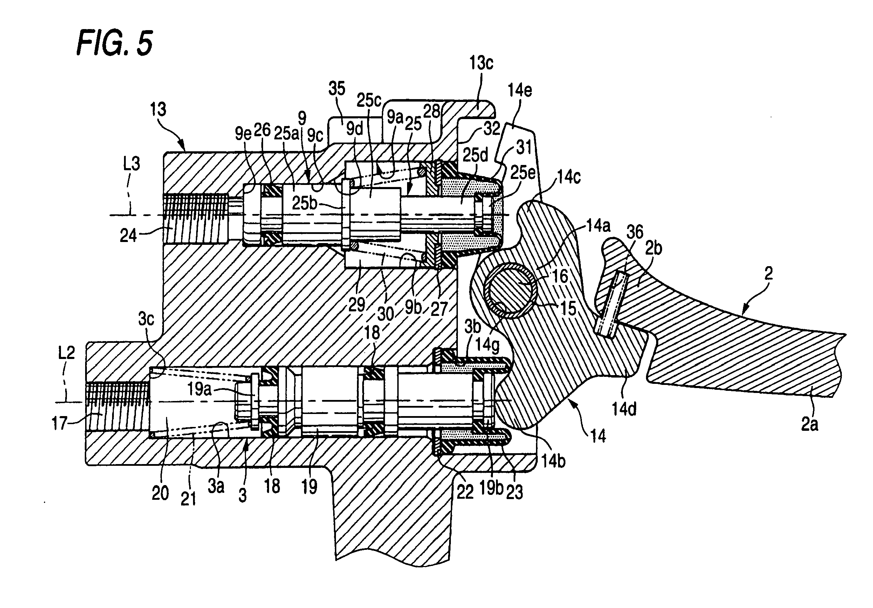

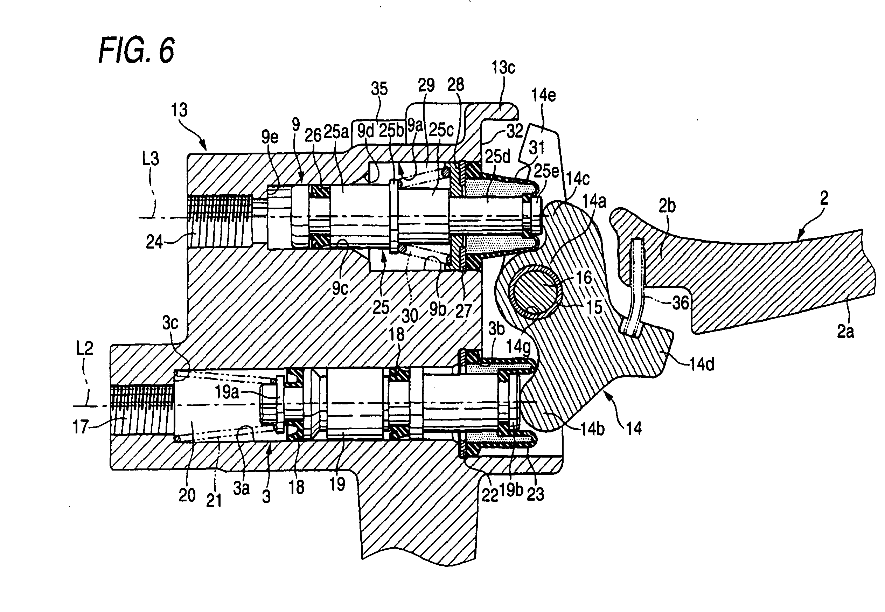

The invention will be described in detail in connection with its individual embodiments with reference to the accompanying drawings. Of Fig. 1 to Fig. 6 showing a first embodiment of the invention: Fig. 1 is a sectional front elevation of an essential portion of an interlocking brake system; Fig. 2 is an explanatory diagram of the interlocking brake system; Fig. 3 is a sectional side elevation of an essential portion of the state, in which the interlocking brake system is mounted on a vehicle body; Fig. 4 is a section taken along line IV - IV of Fig. 3; Fig. 5 is a sectional front elevation of an essential portion of an interlocking brake system at the time when a front brake lever is operated; and Fig. 6 is a sectional front elevation of an essential portion of the interlocking brake system at the time when a rear brake pedal is operated.

As shown in Fig. 2, the interlocking brake system 1 for a bar-handle vehicle of this embodiment is provided with: a first hydraulic system 5 for supplying a hydraulic pressure through a front-wheel hydraulic master cylinder 3 to a front brake 4 in accordance with the operation of a front brake lever 2; and a second hydraulic system 10 for supplying the hydraulic pressure through a rear-wheel hydraulic master cylinder 7 to a rear brake 8 in accordance with the operation of a rear brake pedal 6 acting as a rear brake operation element, and for activating the front-wheel hydraulic master cylinder 3 through an interlocking slave cylinder 9, which is hydraulically activated in accordance with the operation of the rear brake pedal 6, to supply the hydraulic pressure to the front brake 4.

The front-wheel hydraulic master cylinder 3 and the interlocking slave cylinder 9 are juxtaposed, in parallel with the axis L1 of a handle bar 11, to a cylinder body 13 which is attached to the vicinity of an accelerator grip 12 of a handle bar 11 for steering the front wheel in front of the body of the bar-handle vehicle. From the cylinder body 13 on one side of the vehicle body, there are protruded a pair of vertical lever brackets 13a and 13a at the intermediate positions of the front-wheel hydraulic master cylinder 3 and the interlocking slave cylinder 9 on the cylinder bore opening side. The front brake lever 2 and an interlocking member 14 are so mounted on the lever brackets 13a and 13a as to pivot along the axis L2 of the front-wheel hydraulic master cylinder 3 and the axis L3 of the interlocking slave cylinder 9 by means of a collar 15 and a pivot 16, which are arranged at the intermediate positions between the axes L2 and L3. In other words, the collar 15 and the pivot 16 are disposed vertically of the plane passing through the axis L2 and the axis L3 so that the front brake lever 2 and the interlocking member 14 are disposed to turn along the plane spreading through the axis L2 and the axis L3.

The front-wheel hydraulic master cylinder 3 and the cylinder body 13 are arranged at the position of the cylinder body 13 close to the handle bar 11. A first cylinder bore 3a, as bottomed to be used in the front-wheel hydraulic master cylinder 3, is formed along the axis L1 of the handle bar 11, preferably in parallel with the axis L1, and is opened in the cylinder body 13 toward the outside of the vehicle body. A radially larger portion 3b is formed on the open side of the first cylinder bore 3a. In the bottom portion 3c of the first cylinder bore 3a, there is formed a working fluid supply port 17 for supplying the working fluid to the front brake 4. A first piston 19 is inserted into the first cylinder bore 3a through two cup seals 18 and 18 thereby to define a hydraulic chamber 20 between the first piston 19 and the bottom portion 3c of the first cylinder bore 3a. Moreover, the first piston 19 is always urged toward the opening side by a first return spring 21, which is compressed between a flange portion 19a formed on the root end side of the first piston 19 and the bottom portion 3c, and its retraction limit is regulated by a circlip 22, which is mounted on the radially larger portion 3b of the first cylinder bore 3a. Moreover, the first piston 19 takes such a state at an inactive time that its leading end portion 19b protrudes from the first cylinder bore 3a, and a first dust boot 23 is mounted between the leading end portion 19b and the open side of the radially larger portion 3b.

The interlocking slave cylinder 9 is arranged at a position of the cylinder body 13 far from the handle bar 11. A second cylinder bore 9a, as bottomed to be used in the interlocking slave cylinder 9, is formed to have its axis.L3 parallel to the axis L1 of the handle bar 11 and the axis L2 of the first cylinder bore 3a. Especially in this embodiment, the individual axes L1, L2 and L3 are horizontal in the vehicle running position. The interlocking slave cylinder 9 is provided with a radially larger cylinder portion 9b opened in the cylinder body 13 on one side of the vehicle body, a radially smaller cylinder portion 9c on the bottom side, and a conical portion 9d connecting the radially larger cylinder portion 9b and the radially smaller cylinder portion 9c. In the bottom portion 9e of the second cylinder bore 9a, moreover, there is formed a working fluid inlet 24, which is formed to communicate with the radially smaller cylinder 9c and supplied with the hydraulic pressure in accordance with the operation of the rear brake pedal 6. A second piston 25 is provided with: a radially larger stem portion 25a mounting a cup seal 26 thereon and inserted into the radially smaller cylinder portion 9c; a flange portion 25b formed at the end portion of the radially larger stem portion 25a on the cylinder opening side; a radially medium stem portion 25c continuing to the flange portion 25b; and a leading end radially smaller portion 25d continuing to the radially medium stem portion 25c. This second piston 25 is inserted into the second cylinder bore 9a, and a safety lock member 28 is mounted in the opening side of the radially larger cylinder portion 9b through a circlip 27 so that the safety lock member 28, the radially larger cylinder portion 9b and the conical portion 9b define an air chamber 29. Between the safety lock member 28 and the flange portion 25b, there is compressed a second return spring 30 for always urging the second piston 25 toward the cylinder bore bottom portion. Moreover, the radially medium stem portion 25c and the safety lock member 28 abut against each other to regulate the stroke of the second piston 25 and to safety-lock the second piston 25. In the inactive state of the second piston 25, moreover, the leading end portion 25d protrudes from the second cylinder bore 9a, and a second dust boot 31 is mounted between the leading end portion 25e and the opening side of the radially larger cylinder portion 9b.

The first cylinder bore 3a and the second cylinder bore 9a are so formed by using one face of one side of the cylinder body 13 as a working reference face 32 common to the two cylinder bores 3a and 9a that the first cylinder bore 3a, the radially larger portion 3b, the radially larger cylinder portion 9b of the second cylinder bore 9a, the radially smaller cylinder portion 9c, the conical portion 9d and the (not-shown) port are formed by taking sizes from the working reference face 32.

The cylinder body 13 is provided above the front-wheel hydraulic master cylinder 3 with a reservoir tank 33, which communicates with the first cylinder bore 3a through the (not-shown) port and which is reserved with the working fluid. The cylinder body 13 is provided above the interlocking slave cylinder 9 with a bleeder boss portion 13b, which has a bleeder hole 34 communicating with the working fluid inlet 24 on the bottom side of the second cylinder bore. Below the cylinder body 13, moreover, there is disposed a brake lamp switch 35, which has its actuator 35a arranged to protrude from the working reference face 32.

The front brake lever 2 is provided integrally with: an operation portion 2a formed into a rod shape gently curved along the front the accelerator grip 12 and adapted to be operated by the rider; an interlocking member pushing arm 2b continuing to the root portion side of the operation portion 2a and adapted to push and turn the interlocking member 14; and a hinged portion 2c adapted to be supported by the lever brackets 13a and 13a of the cylinder body 13. In the hinged portion 2c, there is formed a through hole 2d for the pivot 16 and the collar 15. From the hinged portion 2c, there is extended a rotation restriction member 2e, which abuts against one side portion of the cylinder body 13 thereby to regulate the rotation movement of the front brake lever 2 toward the interlocking slave cylinder.

The interlocking member 14 is provided integrally with: an intermediate portion hinged portion 14a supported by the lever brackets 13a and 13a of the cylinder body 13; a first action arm 14b and a second action arm 14c of arcuate shapes extending longitudinally of the vehicle body from the hinged portion 14a and abutting against the leading end portions of the first piston 19 and the second piston 25, respectively; an abutment arm 14d confronting the interlocking member pushing arm 2b formed on the front brake lever 2; a rotation restriction member 14e abutting against the working reference face 32 of the cylinder body 13 thereby to regulate the rotation movement of the interlocking member 14; and a switch action portion 14f for pushing the actuator 35a of the brake lamp switch 35 extended from the rotation restriction member 14e. In the hinged portion 14a, there is formed a through hole 14g for the pivot 16 and the collar 15. Between the abutment arm 14d and the interlocking member pushing arm 2b, there is compressed a spring 36 for urging the front brake lever 2 to the inactive position. Moreover, the cylinder body 13 is provided, on the side opposite to the bar handle, with a first cover wall portion 13c for covering the abutting portion between the rotation restriction member 14a of the interlocking member 14 and the working reference face 32, and, on the side of the cylinder body 13 above the vehicle body, with a second cover wall portion 13d for covering that abutting portion.

In the interlocking brake system 1 thus far constituted, while the front brake lever 2 and the rear brake pedal 6 are inactive, by the elastic forces of the first return spring 21 of the front-wheel hydraulic master cylinder 3, the second return spring 30 of the interlocking slave cylinder 9 and the spring member 36, the front brake lever 2 is regulated in its rotation movement by having its rotation restriction member 2e abutting against one side portion of the cylinder body 13, and the interlocking member 14 is regulated in its rotation movement by having its rotation restriction member 14e abutting against the working reference face 32. Moreover, the switch action portion 14f disposed in the interlocking member 14 pushes the actuator 35a thereby to turn OFF the brake lamp switch 35.

When the front brake lever 2 is turned, the interlocking member pushing arm 2b of the front brake lever 2 pushes the abutment arm 14d of the interlocking member 14, as shown in Fig. 5, and the front brake lever 2 and the interlocking member 14 turn on the pivot 16 toward the front-wheel hydraulic master cylinder 3, so that the second action arm 14c of the interlocking member 14 pushes the first piston 19 into the bottom portion of the cylinder bore against the elastic force of the first return spring 21. Accordingly, a hydraulic pressure is established in the hydraulic chamber 20 and is supplied from the working fluid supply port 17 via the first hydraulic system 5 to the front brake 4 thereby to activate the front brake 4. In accordance with the turning operation of the front brake lever 2, moreover, the rotation restriction member 2e of the front brake lever 2 leaves one side portion of the cylinder body 13. Moreover, the rotation restriction member 14e of the interlocking member 14 leaves the working reference face 32, and the switch action portion 14f leaves the actuator 35a. As a result, the actuator 35a of the brake lamp switch 35 protrudes so that the brake lamp switch 35 is turned ON to light the not-shown brake lamp.

When the rear brake pedal 6 is operated, on the other hand, a hydraulic pressure is established in the (not-shown) hydraulic chamber of the rear-wheel hydraulic master cylinder 7, as shown in Fig. 6, and is supplied to the rear brake via the second hydraulic system 10 thereby to actuate the rear brake 8. On the other hand, the hydraulic pressure, as established in the hydraulic chamber of the rear-wheel hydraulic master cylinder 7, is supplied via the second hydraulic system 10 from the working fluid inlet 24 of the interlocking slave cylinder 9 to the second cylinder bore 9a thereby to push the second piston 25 against the elastic force of the second return spring 30 toward the cylinder bore opening. Accordingly, the leading end portion 25e of the second piston 25 protrudes from the cylinder bore opening, and pushes the first action arm 14b of the interlocking member 14 thereby to turn the interlocking member 14 on the pivot 16. As the spring member 36 extends, the interlocking member 14 turns the front brake lever 2 solely while holding it in an inoperative state, so that the second action arm 14c activates the front-wheel hydraulic master cylinder 3 thereby to activate the front brake 4, as described hereinbefore. At this time, moreover, the rotation restriction member 14e of the interlocking member 14 leaves the working reference face 32 so that the brake lamp switch 35 is turned ON to light the brake lamp, as described above.

In this embodiment, the first cylinder bore 3a of the front-wheel hydraulic master cylinder 3 and the second cylinder bore 9a of the interlocking slave cylinder 9 are integrally formed in the single cylinder body 13, as described hereinbefore, so that the interlocking brake system can be small-sized. Moreover, the front-wheel hydraulic master cylinder 3 and the interlocking slave cylinder 9 are formed and sized according to the common working reference face 32 on one side of the cylinder body 13. As a result, the cylinder bores 3a and 9a and the ports can be easily worked highly accurately, and the precisions of the clearances can be enhanced so that a satisfactory operation feeling can be obtained at the braking operation time. Moreover, the rotation restriction member 14e of the interlocking member 14 is brought for the safety lock into abutment against the working reference face 32 so that the safety lock can be ensured at a predetermined position while eliminating another abutment face. At the position near the interlocking member 14 or the front brake lever 2, moreover, the rotation restriction member can be brought into abutment against the working reference face so that the interlocking brake system 1 can be small-sized. By providing the first cover wall portion 13c and the second cover wall portion 13d, moreover, the clearance, if formed between the rotation restriction member 14e and the working reference face 32 at the time of operating the front brake lever 2, can be prevented from biting a foreign substance, without covering the pivot 16 with an additional cover. Thus, the lever operation can always be done satisfactorily to reduce noises such as blowing noises. Moreover, the rotation restriction member 14e of the interlocking member 14 is provided with the switch action portion 14f of the brake lamp switch 35 so that the brake lamp switch 35 is activated to turn ON the brake lamp when the front brake lever 2 or the rear brake pedal 6 is operated.

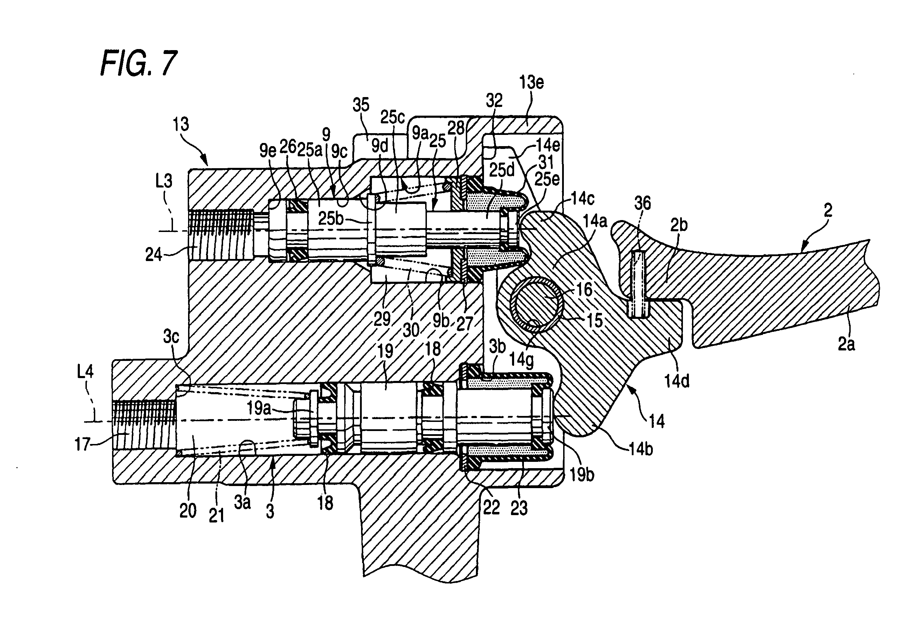

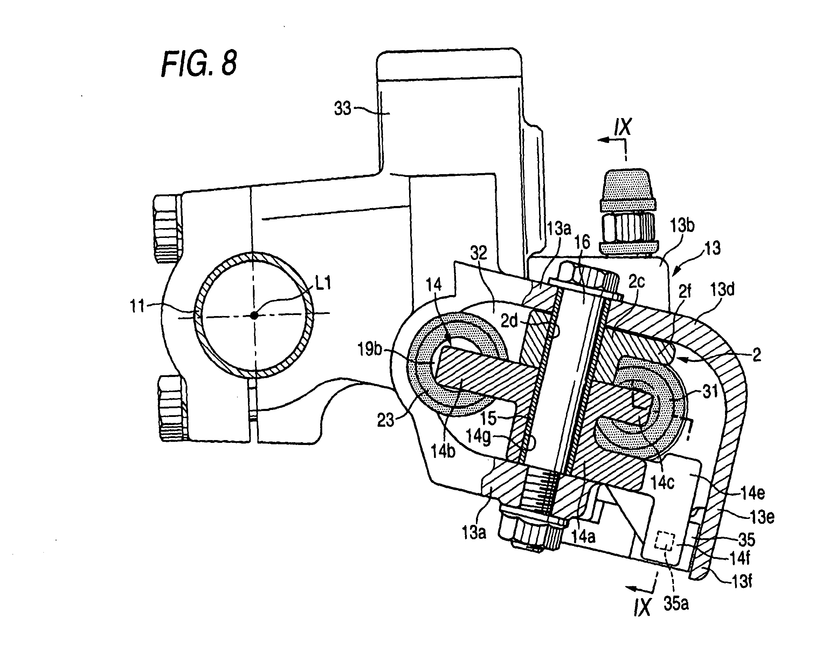

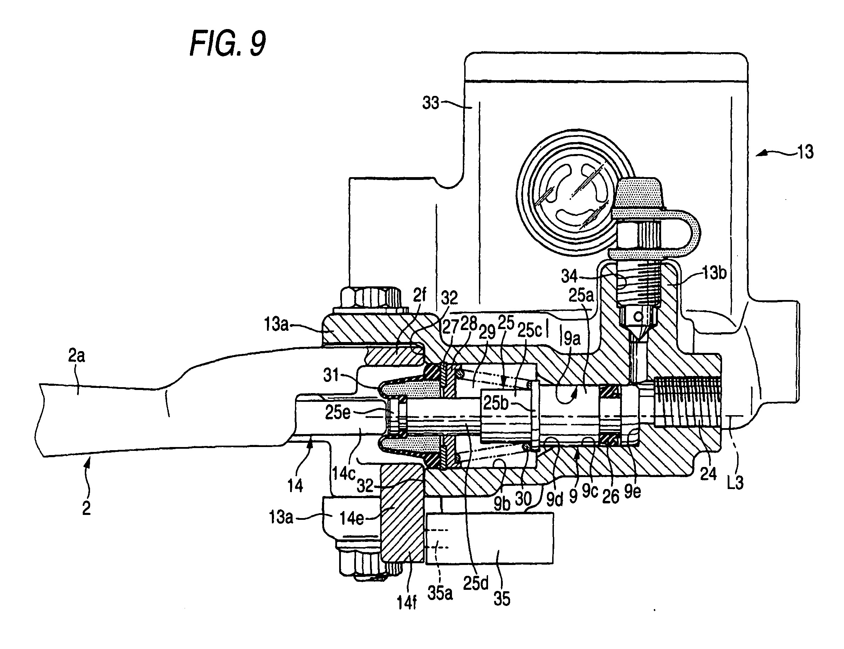

Of Fig. 7 to Fig. 9 showing a second embodiment of the invention: Fig. 7 is a sectional front elevation of an essential portion of an interlocking brake system;. Fig. 8. is a sectional side elevation of the state, in which the interlocking brake system is mounted on the vehicle body; and Fig. 9 is a section taken along line IX - IX of Fig. 8. Moreover, the same members as those of the first embodiment are omitted in their detailed description by designating them by the common reference numerals.

In this embodiment, a first cover wall portion 13e, which is formed in the cylinder body 13 on the side opposite to the bar handle and which covers the abutting portion between the rotation restriction member 14a of the interlocking member 14 and the working reference face 32, is extended toward the front brake lever 2 and downward of the vehicle thereby to form a third cover wall portion 13f, by which the abutting portion between the brake lamp switch 35 and the switch action portion 14f is covered from the front of the vehicle advancing direction. Moreover, the front brake lever 2 of this embodiment is safety-locked such that a rotation restriction member 2f abuts against the working reference face 32 as in the rotation restriction member 14e of the interlocking member 14.

In this embodiment thus constituted, the clearance, which is established between the rotation restriction member 14e of the interlocking member 14 and the working reference face 32 at the operation time of the front brake lever 2, can be completely covered from the front in the vehicle running direction with the first cover wall portion 13e so that it can be reliably prevented from being clogged with the foreign substance. Moreover, the clearance, which is established between the side face of the brake lamp switch 35 and the switch action portion 14f of the interlocking member 14, can be prevented by the third cover wall portion 13f from being clogged with the foreign substance thereby to activate the brake lamp switch reliably.

In the invention, the rear brake actuator may be a brake lever, and the cylinder body can also be applied to a vertical type brake device, in which the axis of the cylinder bore is arranged perpendicular to the axis of the handle bar.

## Claims

1. An interlocking brake system for a bar-handle vehicle, comprising an interlocking mechanism which performs such that :
when a rear brake operation element (6) is operated, a rear-wheel hydraulic master cylinder (7) supplies hydraulic pressure to a rear-wheel brake (8) and an interlocking slave cylinder (9), and an interlocking member (14) transmits a movement of a piston (25) of the interlocking slave cylinder (9) to a piston (19) of a front-wheel hydraulic master cylinder (3) to thereby supply the hydraulic pressure from the front-wheel hydraulic master cylinder (3) to a front-wheel brake (4), and
when a front-wheel brake lever (2) is operated, the interlocking member (14) transmits an operation of the front-wheel brake lever (2) to the piston (19) of the front-wheel hydraulic master cylinder (3) to thereby supply the hydraulic pressure from the front-wheel hydraulic master cylinder (3) to the front-wheel brake (4),
the interlocking brake system is **characterized in that**:
a cylinder bore (9b,9c) of the interlocking slave cylinder (9) and a cylinder bore (3a) of the front-wheel hydraulic master cylinder (3) are arranged on one cylinder body (13) so as to be parallel to each other,
the two cylinder bores (9b,9c,3a) are formed adjacently on one side of the cylinder body (13) by defining one side face of the cylinder body (13) as a common working reference face,
the front brake lever (2) and the interlocking member (14) are hinged on a rotation axis (16) positioned between two openings of the cylinder bore so as to pivot along axial directions of the cylinder bores,
the interlocking member (14) comprises:
a hinged portion hinged on the rotation axis (16);
a pair of action (14c,14b) arms extending longitudinal direction of the vehicle body from the hinged portion and individually abutting against a piston end face of the front-wheel hydraulic master cylinder (3) and a piston end face of the interlocking slave cylinder (9);
an abutment arm (2b) for abutting against an interlocking member pushing arm (14d) disposed at the front brake lever (2); and
a rotation restriction member (14c) for restricting a rotation movement thereof toward the interlocking slave cylinder (9),
the front brake lever (2) comprises:
a hinged portion hinged on the rotation axis (16);
an operation portion (2a) extending from the hinged portion of the front brake lever (2),
the interlocking member (14) pushing arm formed at a base end portion of the operation portion; and
a rotation restriction member (14c) for restricting the rotation movement toward the interlocking slave cylinder; and
at least one of the rotation restriction member (14c) of the interlocking member and the rotation restriction member (2e) of the front brake lever (2) abuts against the working reference face (32) to restrict the rotation movements of the interlocking member (14) and the front brake lever (2) toward the interlocking slave cylinder (9).

2. The interlocking brake system for the bar-handle vehicle as set forth in claim 1, is **characterized in that** a first wall cover portion, which covers a abutting portion defined between one of the rotation restriction members and the working reference face, is formed on a side of the cylinder body opposite to a bar handle.

3. The interlocking brake system for the bar-handle vehicle as set forth in claim 1 or 2, is **characterized in that** a second wall cover portion, which covers an abutting portion defined between one of the rotation restriction members and the working reference face, is formed on an upper side of the cylinder body, the upper side is defined when the cylinder body is mounted on the vehicle body.

4. The interlocking brake system for the bar-handle vehicle as set forth in any of claims 1 to 3, is **characterized in that** the rotation restriction member of the interlocking member is extended to form a switch action portion of a brake lamp switch.

## Patentansprüche

1. Verriegelungsbremssystem für ein Lenkerfahrzeug, umfassend einen Verrieglungsmechanismus, der so funktioniert, dass,
wenn ein hinteres Bremsbetätigungselement (6) betätigt wird, ein Hinterradhydraulikhauptzylinder (7) einer Hinterradbremse (8) und einem Verriegelungsnebenzylinder (9) Hydraulikdruck zur Verfügung stellt und ein Verriegelungselement (14) eine Bewegung eines Kolbens (25) des Verriegelungsnebenzylinders (9) an einen Kolben (19) eines Vorderradhydraulikhauptzylinders (3) überträgt, um dadurch den Hydraulikdruck von dem Vorderradhydraulikhauptzylinder (3) an eine Vorderradbremse (4) bereitzustellen, und
wenn ein Vorderradbremshebel (2) betätigt wird, das Zwischenelement (4) eine Betätigung des Vorderradbremshebels (2) an den Kolben (19) des Vorderradhydraulikhauptzylinders (3) überträgt, um dadurch den Hydraulikdruck von dem Vorderradhydraulikhauptzylinder (3) an die Vorderradbremse (4) bereitzustellen,
wobei das Verriegelungsbremssystem **dadurch**
**gekennzeichnet ist, dass**:
eine Zylinderbohrung (9b, 9c) des Verriegelungsbremszylinders (8) und eine Zylinderbohrung (3a) des Vorderradhydraulikhauptzylinders (3) auf einem Zylinderkörper (13) angeordnet sind, um zueinander parallel zu sein,
die zwei Zylinderbohrungen (9b, 9c, 3a) angrenzend auf einer Seite des Zylinderkörpers (13) geformt sind, indem eine Seite des Zylinderkörpers (13) als gemeinsame Arbeitsbezugsfläche festgelegt wird,
der vordere Bremshebel (2) und das Verriegelungselement (14) an einer Drehachse (16) angelenkt sind, die zwischen zwei Öffnungen der Zylinderbohrung angeordnet ist, um sich entlang von Axialrichtungen der Zylinderbohrungen zu drehen,
wobei das Verriegelungselement (14), umfasst:
einen Gelenkabschnitt, der an der Drehachse (16) angelenkt ist,
ein Paar Aktionsarme (14c, 14b), die sich entlang der Längsrichtung des Fahrzeugkörpers von dem Gelenkabschnitt erstrecken und einzeln an einer Kolbenendfläche des Vorderradhydraulikhauptzylinders (3) und an einer Kolbenendfläche des Verriegelungsnebenzylinders (9) anliegen,
einen Anlegearm (2b) zum Anlegen an einen Verriegelungselementdrückarm (14d), der an dem Vorderbremshebel (2) angeordnet ist, und
ein Drehbegrenzungselement (14c) zum Begrenzen einer Drehbewegung davon in Richtung des
Verriegelungsnebenzylinders (9),
wobei der Vorderbremshebel (2), umfasst:
einen Gelenkabschnitt, der an die Drehachse (16) angelenkt ist,
einen Betätigungsabschnitt (2a), der sich von dem Gelenkabschnitt des Vorderbremshebels (2) erstreckt,
den Verriegelungselementdrückarm, der als Basisendabschnitt des Betätigungsabschnittes geformt ist, und
einen Drehbegrenzungselement (14c) zum Begrenzen der Drehbewegung in Richtung des Verriegelungsnebenzylinders,
und
wobei das Drehbegrenzungselement (14c) des Verriegelungselementes und/oder das Drehbegrenzungselement des Vorderbremshebels (2) an die Arbeitsbezugsfläche (32) angrenzt, um die Drehbewegungen des Verriegelungselementes (14) und des Vorderbremshebels (2) in Richtung des Verriegelungsnebenzylinders (9) zu begrenzen.

2. Verriegelungsbremssystem für ein Lenkerfahrzeug nach Anspruch 1, **dadurch gekennzeichnet, dass** ein erster Wandabdeckabschnitt, der einen zwischen einem der Drehbegrenzungselemente und der Arbeitsbezugsfläche festgelegten Anlegeabschnitt bedeckt, auf einer Seite des Zylinderkörpers gegenüber einem Lenkergriff ausgebildet ist.

3. Verriegelungsbremssystem für ein Lenkerfahrzeug nach Anspruch 1 oder 2, **dadurch gekennzeichnet, dass** ein zweiter Wandabdeckabschnitt, der einen zwischen einem der Drehbegrenzungselemente und der Arbeitsbezugsfläche festgelegten Anlegeabschnitt bedeckt, auf einer oberen Seite des Zylinderkörpers ausgebildet ist, wobei die obere Seite festgelegt wird, wenn der Zylinderkörper an dem Fahrzeugkörper angebracht wird.

4. Verriegelungsbremssystem für ein Lenkerfahrzeug nach einem der Ansprüche 1 bis 3, **dadurch gekennzeichnet, dass** das Drehbegrenzungselement des Verriegelungselements verlängert ist, um einen Schalterbetätigungsabschnitt eines Bremslampenschalters auszubilden.

## Revendications

1. Système de frein à verrouillage pour un véhicule à guidon, comprenant un mécanisme de verrouillage qui fonctionne de sorte que :
lorsqu'un élément de mise en oeuvre de frein arrière (6) est mis en oeuvre, un maître-cylindre hydraulique de roue arrière (7) fournit une pression hydraulique à un frein de roue arrière (8) et à un cylindre asservi de verrouillage (9), et un membre de verrouillage (14) transmet un mouvement d'un piston (25) du cylindre asservi de verrouillage (9) à un piston (19) d'un maître-cylindre hydraulique de roue avant (3) pour fournir de ce fait la pression hydraulique en provenance du maître-cylindre hydraulique de roue avant (3) à un frein de roue avant (4), et
lorsqu'un levier de frein de roue avant (2) est mis en oeuvre, le membre de verrouillage (14) transmet une mise en oeuvre du levier de frein de roue avant (2) au piston (19) du maître-cylindre hydraulique de roue avant (3) pour fournir de ce fait la pression hydraulique en provenance du maître-cylindre hydraulique de roue avant (3) au frein de roue avant (4),
le système de frein à verrouillage est **caractérisé en ce que :**
un alésage de cylindre (9b, 9c) du cylindre asservi de verrouillage (9) et un alésage de cylindre (3a) du maître-cylindre hydraulique de roue avant (3) sont agencés sur un seul corps de cylindre (13) de façon à être parallèles l'un à l'autre,
les deux alésages de cylindre (9b, 9c, 3a) sont formés en contiguïté sur un côté du corps de cylindre (13) en définissant une face latérale du corps de cylindre (13) en tant que face de référence de travail commune,
le levier de frein avant (2) et le membre de verrouillage (14) sont articulés sur un axe de rotation (16) positionné entre deux ouvertures de l'alésage de cylindre de façon à pivoter le long de directions axiales des alésages de cylindre,
le membre de verrouillage (14) comprend :
une partie articulée sur l'axe de rotation (16) ;
un couple de bras d'action (14c, 14b) s'étendant le long de la direction longitudinale du corps de véhicule depuis la partie articulée et butant individuellement contre une face d'extrémité de piston du maître-cylindre hydraulique de roue avant (3) et une face d'extrémité de piston du cylindre asservi de verrouillage (9) ;
un bras de butée (2b) pour buter contre un bras de poussée de membre de verrouillage (14d) disposé au niveau du levier de frein avant (2) ; et
un membre de restriction de rotation (14c) pour restreindre un mouvement de rotation de celui-ci vers le cylindre asservi de verrouillage (9),
le levier de frein avant (2) comprend :
une partie articulée sur l'axe de rotation (16) ;
une partie de mise en oeuvre (24) s'étendant depuis la partie articulée du levier de frein avant (2) ;
le bras de poussée de membre de verrouillage (14) étant formé au niveau d'une partie d'extrémité de base de la partie de mise en oeuvre ; et
un membre de restriction de rotation (14c) pour restreindre le mouvement de rotation vers le cylindre asservi de verrouillage ; et
au moins un du membre de restriction de rotation (14c) du membre de verrouillage et du membre de restriction de rotation (2e) du levier de frein avant (2) bute contre la face de référence de travail (32) pour restreindre les mouvements de rotation du membre de verrouillage (14) et du levier de frein avant (2) vers le cylindre asservi de verrouillage (9).

2. Le système de frein à verrouillage pour le véhicule à guidon selon la revendication 1, **caractérisé en ce qu'**une première partie de recouvrement de paroi, qui recouvre une partie de butée définie entre l'un des éléments de restriction de rotation et la face de référence de travail, est formée sur un côté du corps de cylindre opposé à un guidon.

3. Le système de frein à verrouillage pour le véhicule à guidon selon la revendication 1 ou 2, **caractérisé en ce qu'**une seconde partie de recouvrement de paroi, qui recouvre une partie de butée définie entre un des membres de restriction de rotation et la face de référence de travail, est formée sur un côté supérieur du corps de cylindre, le côté supérieur est défini lorsque le corps de cylindre est monté sur le corps de véhicule.

4. Le système de frein à verrouillage pour le véhicule à guidon selon l'une quelconque des revendications 1 à 3, est **caractérisé en ce que** le membre de restriction de rotation du membre de verrouillage est étendu pour former une partie d'action de commutateur d'un commutateur de lampe de frein.
